# EUROPÄISCHE PATENTSCHRIFT

(11) **EP 0 658 656 B1**
(45) Veröffentlichungstag und Bekanntmachung des Hinweises auf die Patenterteilung: **24.02.1999**
(21) Anmeldenummer: 94119828.5
(22) Anmeldetag: 15.12.1994
(51) Int. Cl.: E02D 31/02, E04D 5/10

(54) **Als wasserdichte Verkleiding für Bauwerkteile dienende flexible Dichtungsbahn**
Flexible waterproofing membrane for structural parts
Membrane d'étanchiété flexible d'imperméabilisation des structures

(30) Priorität: 17.12.1993 DE 9319466 U
(43) Veröffentlichungstag der Anmeldung: 21.06.1995
(73) Patentinhaber: ODENWALD CHEMIE GmbH, 69246 Schönau/Heidelberg (DE)
(72) Erfinder: Weiss, Edgar, D-69239 Neckarsteinach (DE); Augele, Hans-Peter, D-69118 Heidelberg (DE); Koch, Gerold, D-75378 Bad Liebenzell-Möttlingen (DE)
(74) Vertreter: Müller, Hans-Jürgen, Dipl.-Ing.

(56) Entgegenhaltungen:
- DE-A- 3 636 207
- DE-B- 1 245 522
- DE-U- 6 813 573
- DE-U- 9 102 064
- US-A- 5 248 225

## Beschreibung

Die Erfindung betrifft eine Dichtungsbahn der im Oberbegriff des Anspruchs 1 genannten Gattung. Derartige als Flachdachabdeckung dienende Bahnen nach der DE-GM-6 813 573 und GB-A-2 105 256 bestehen aus einem klebmittelfreien Verbund einer auf eine Kunststoffschicht aufkaschierten Schaumstoffschicht. Sie wird auf das Flachdach aufgeklebt und erlaubt Luft- und Gasausgleich, wodurch Blasenbildung und Abkleben verhindert wird.

Zum Abdichten von beispielsweise Gebäuden gegen Feuchtigkeit, wie Regen, sind auch bereits Bitumen aufweisende Kunststoffschichten bekannt, die sich gegenüber Dachpappe durch bessere Biegbarkeit auszeichnen. Darüber hinaus ist es auch bekannt, Kelleraußenwände von Neubauten nach außen zum Erdreich hin mit Bitumenanstrichen oder mit Hartschaumplatten abzudecken, über welche eine Kunststoffbahn als "Feuchte-Sperre" gespannt wird. Die Anbringung derartige Abdichtungsmittel bereitet jedoch verhältnismäßig viel Mühe und auch die Eigenschaften derselben hinsichtlich der Abdichtfunktion lassen insb. dann zu wünschen übrig, wenn nach dem Anbringen dieser Abdichtmittel harte Gegenstände an diese gedrückt werden, wie dies beispielsweise beim Einfüllen von Kies und mit Steinen versetztem Erdreich in die Baugrube vielfach geschieht.

Eine Dichtungsbahn der im Oberbegriff des Anspruchs 1 genannten Gattung ist auch bekannt aus der DE-A-36 36 207. Diese Dichtungsbahn besteht aus einem Verbund der eigentlichen aus geschlossenzelligem Schaumstoff bestehenden Dichtungsschicht und einer dickeren Drainageschicht, welche außenseitig durch eine Filterschicht abgedeckt ist. Die Drainage- und die Filterschicht weisen Kunststoff auf. Die zum Abdichten gegen Feuchtigkeit dienende Schaumstoffschicht wird bei diesem Stand der Technik festhaftend mittels einer Klebeschicht am Fundament angeklebt, das vorher mit einem insbesondere aus Bitumen bestehenden Voranstricht versehen wurde. Dabei wird auf vollflächige Verbindung der gesamten Schaumstoffschicht mit diesem Voranstrich und daher dem Fundament Wert gelegt.

Der Erfindung liegt die Aufgabe zugrunde, eine flexible Dichtungsbahn nach dem Oberbegriff des Anspruches 1 mit einfachen Mitteln dahingehend zu verbessern, daß sie trotz einfacher Herstellbarkeit verbesserte Eigenschaften hinsichtlich der Verlegung und Anbringung an den Außenseiten von Fundamenten sowie möglichst auch hinsichtlich der Qualität und Dauerhaftigkeit der Abdichtung im Erdreich aufweist; die Dichtungsbahn sollte wegen seiner Verlegung im Boden auch ökologisch unbedenklich verwendbar sein.

Die Erfindung ist im Anspruch 1 gekennzeichnet und in Unteransprüchen sind weitere Ausbildungen derselben beansprucht.

Die erfindungsgemäße Dichtungsbahn ist ein Verbund bestehend aus der z.B. Bitumen aufweisenden biegbaren Kunststoffschicht einerseits und mindestens einer flexiblen und insb. dauerelastischen Schaumstoffschicht andererseits, welche beim Verlegen mindestens teilweise komprimiert wird. Mit anderen Worten: Die Schaumstoffschicht expandiert zum Teil erst nach dem Verlegen an der Fundamentaußenwand auf ihre volle Dicke, sofern dazu genügend Raum zur Verfügung steht; beim Expandieren unter z.B. vom wieder eingefüllten Erdreich erzeugtem Gegendruck schmiegt sie sich eng - Unebenheiten ausfüllend- an das unterirdische Mauerwerk an.

Nach einer besonderen Ausbildung der Erfindung ist die Schaumstoffschicht dem abzudichtenden Fundament, d.h. der insb. vertikal verlaufenden Außenwand, die insb. mit Verstärkungen armierte Kunststoffschicht dagegen der Feuchtigkeit, beispielsweise dem Erdreich, zugewandt zu verlegen.

Es empfiehlt sich, die Schaumstoffschicht aus einem Weichschaum insb. aus Polyurethanschaum auf Polyätherbasis herzustellen, der bevorzugt mit Bitumenacrylat imprägniert ist. Das Raumgewicht der Schaumstoffschicht sollte zwischen bevorzugt 80 und 180 kg/m³, insb. zwischen 100 und 150 kg/m³, gewählt sein. Bei einem Komprimierungsgrad von etwa 20% ist der gegenüber der endgültigen Schaumstoff schichtdicke nach erfolgtem Expandieren mit Bitumenacrylat getränkte PUR-Weichschaumstoff nicht nur schlagregendicht, sondern auch druckwasserdicht. Die Schaumstoffschicht kann zwischen 15 und 50%, insb. bis zu 30% Vorkomprimiert sein. Darüber hinaus weist dieser Teil des erfindungsgemäßen Verbundes eine sehr geringe Wärmeleitfähigkeit von nur etwa 0,05 Wm.k auf, so daß der Verbund auch thermisch sehr gut zu isolieren vermag. Die Schaumstruktur sollte verhältnismäßig feinporig sein. An sich ist das Komprimieren von Fugendichtungsprofilen beim sog. Trockenquetschen von naßimprägnierten Schaumstoffbändern bereits bekannt (DE-A-2 307 381, 1 245 522, DD-A-94 051). Dieses Komprimieren dient aber lediglich dem Herstellungszweck, nämlich zum Auspressen von nicht benötigtem überschüssigen Tränkmittel.

Der erfindungsgemäße Verbund weist als Kunststoffschicht insb. ein Ethylen-Buthylacrylat-Copolymerisat mit Bitumen auf, das bevorzugt mit einer Verstärkung verstärkt ist, die insb. aus einem Glasvlies bestehen kann, welche in die Kunststoffschicht eingelegt oder auf diese aufkaschiert ist. Die Kunststoffschicht ist ebenfalls chemisch neutral mit einem pH-Wert von 7 und weist bevorzugt eine Dichte zwischen 0,9 und 1 g/cm³ auf.

Es hat sich gezeigt, daß ein solcher Verbund hervorragend geeignet ist zum einfachen und schnellen Verlegen, um Bauwerkfundamente gegen das feuchte Erdreich zu schützen. Da der Verbund wegen der Verschweißbarkeit sich überlappender thermoplastischer Kunststoffschichten mit dem Schweißfaktor 1 materialhomogen zu großen Flächen ausbreitbar ist, wird auch uneingeschränkt Wurzelfestigkeit erreicht. Es besteht daher auch nicht die Gefahr, daß die Wurzeln benachbarter Bäume und Sträucher den Verbund durchstoßen und die Abdichtung beeinträchtigen. Der Verbund weist eine hohe Reißfestigkeit und auch hohe Perforationsfestigkeit trotz hoher Dehnfähigkeit auf, so daß auch erheblich unebene Flächen, wie die Außenflächen von gemauerten Bauwerkfundamenten, die es zu sanieren gilt, unmittelbar mit dem erfindungsgemäßen Verbund der Kunststoffschicht und Schaumstoffschicht gegen Feuchtigkeit -und sogar gegen Abkühlung- abgedichtet werden können, indem die flexibel biegbare, komprimierte Schaumstoffschicht an die Außenseite des Fundaments angelegt wird, während die Kunststoffschicht dem wieder aufzufüllenden Erdreich ausgesetzt wird. Beim Entspannen der Kompression des Schaumstoffes z.B. nach dem Verfüllen nach Verdichten des den Erdaushub weiter ausfüllenden Materials, legen sich die äußeren Schaumstoffzellen sehr dicht an die Fundamentwand an; Unebenheiten werden ausgeglichen. Der Verbund belastet auch nicht die Umwelt, so daß Grundwasser und tierische Lebewesen nicht gefährdet werden. Im Brandfall entstehen keine korrosiven und Halogene enthaltende Gase.

Der Verbund zwischen den beiden Schichten kann durch Verwendung einer Klebstoff-Zwischenschicht, aber auch durch Aufkalandrieren der Schaumstoffschicht auf die Kunststoffschicht erfolgen.

Einen besonderen Vorteil bietet der erfindungsgemäße Verbund dadurch, daß die einzelnen Bahnen z.B. mittels je eines die Schaumstoffschicht überragenden Randes der Kunststoffschicht, thermisch miteinander verschweißt werden können, so daß auch große Flächen ohne Anwendung zusätzlicher klebender Abdichtbänder feuchtigkeitsdicht gemacht werden können.

Ein Ausführungsbeispiel der Erfindung wird anhand der Zeichnung erläutert. Dabei zeigen:
- Figur 1: einen schematischen Teilschnitt durch eine biegbare Dichtungsbahn gemäß der Erfindung und
- Figur 2: den Querschnitt durch eine erfindungsgemäßen Dichtungsbahn nach der Verlegung an der Außenseite eines sanierten Gebäudefundaments.

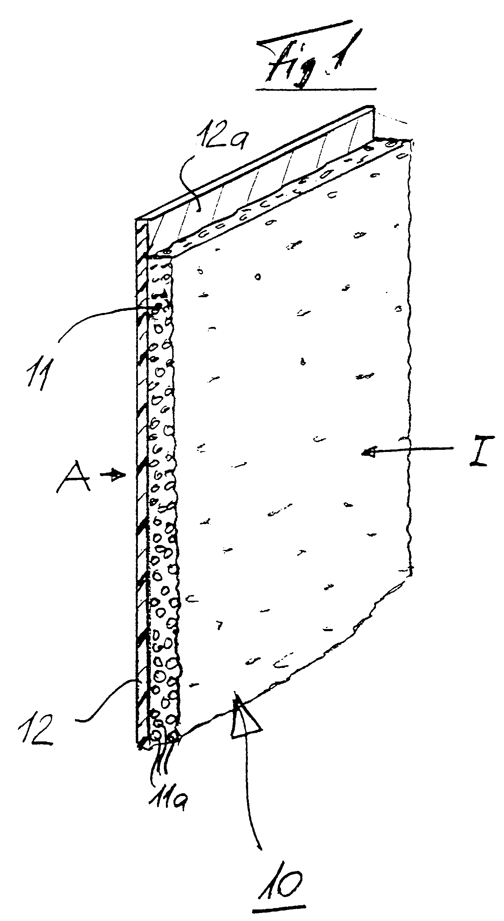

Gemäß Figur 1 weist die biegbare Dichtungsbahn eine biegbare aus PUR-Weichschaum bestehende Schaumstoffschicht 11 auf, während Zwischenräume zwischen den einzelnen Schaumstoffporen bzw. -Zellen mit Bitumenacrylat imprägniert sind. Diese Schaumstoffschicht 11 ist an einer Seite mit einer Kunststoffschicht 12 verbunden, welche bevorzugt aus einem Ethylen-Butylacrylat-Copolymersiat mit Bitumen besteht und mit einem in der Figur nicht dargestellten Glasvlies verstärkt ist, ohne daß die Flexibilität bzw Biegbarkeit und Verformbarkeit des gesamten Verbundes hierdurch wesentlich beeinträchtigt ist. An der in Fig. 1 gezeigten Oberseite ragt ein z.B. 8 cm breiter Randteil 12a der Kunststoffschicht 12 über die Schaumstoffschicht 11 hinaus; mittels dieses Randteils 12 a können Überlappungsbereiche von Kunststoffschichten 11 von Nachbarbahnen gebildet werden, wenn die Schaumstoffschichten 11 an aneinandergelegt werden. Die Schaumstoffschicht 11 ist bis zu etwa 20%,insb. zwischen 10 und 20%, gegenüber der ursprünglichen Dicke der Schaumstoffschicht vorkomprimiert, d.h. daß die Schaumstoffporen bzw. -Zellen 11a soweit zusammengedrückt sind, sich aber nach dem Verlegen teilweise entspannen und sich an die abgedeckte Wand trotz Unebenheiten "flächig" anlegen, also sozusagen wieder "Aufquellen" und hierdurch Zwischenräume ausfüllen. Außerdem können andere Teilbereiche der Schaumstoffschicht 11 durch Druck von der entgegengesetzten Seite der verformbaren Kunststoffschicht 12 gegen Vorsprünge der im wesentlichen vertikalen Wand gepreßt werden, wodurch sich die betr. Schaumzellen 11a durch Quetschwirkung verformen. Auch horizontal oder schräg im Erdreich verlaufende Außenflächen des Fundaments sind entsprechend gut und schnell großflächig abdichtbar.

Die Außenseite A der biegbaren Dichtungsbahn wird der abzudichtenden Feuchte und die Innenseite I dem Gebäudeteil oder dergleichen beim Verlegen zugewandt, das vor Feuchtigkeit geschützt werden soll.

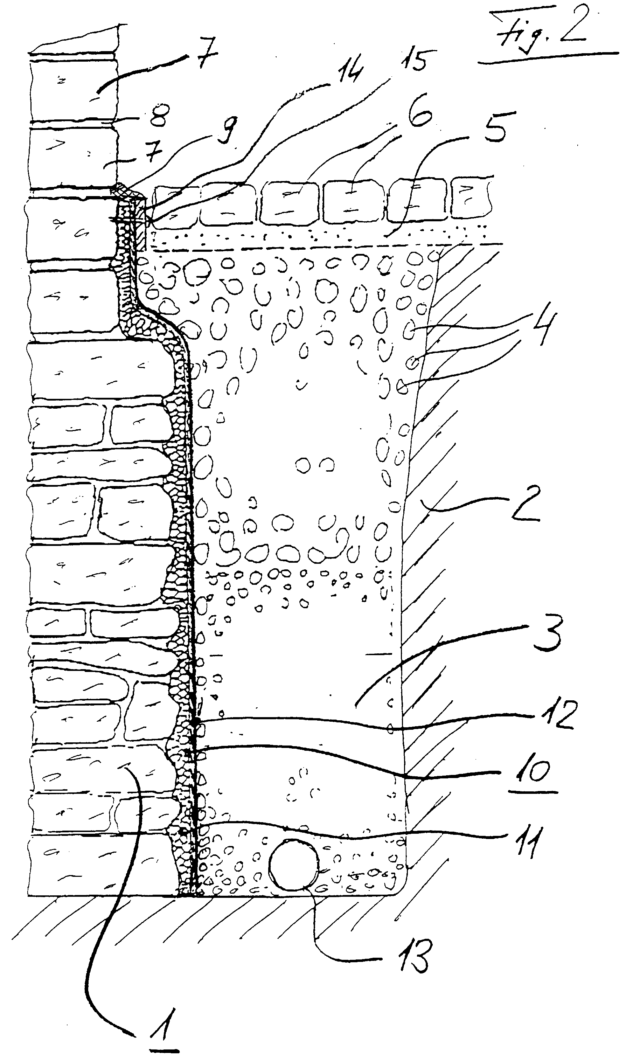

In Figur 2 ist schematisch eine besonders bevorzugte Verwendung der erfindungsgemäßen Dichtungsbahn dargestellt, wonach das seit langem bekannte Problem der Sanierung von insb. denkmalgeschützten Gebäuden innerhalb des Erdreichs auf sehr viel einfachere Weise gelöst werden kann:

Beim Sanieren von im Erdreich befindlichem Mauerwerks von z.B. Altbauten und historischen Baudenkmälern wird der betreffende Fundamentbereich zuerst insb. bis zur Fundamentsohle freigelegt und wird das Fundamentmauerwerk 1 gesäubert auch durch Auskratzen der Fugen. Üblicherweise erfolgt dann das Aufbringen eines Voranstriches und einer Putzschicht, um grobe Unebenheiten auszugleichen. Nach dem Aushärten von vielen Tagen wurde bisher eine zweite Putzschicht aufgebracht, um die endgültige Putz-oberfläche herzustellen, was wiederum eine Standzeit von Wochen verlangt, ehe die eigentliche Feuchtsperre in flüssiger- oder Bahnform aufgebracht wird.

Gemäß der Erfindung muß dagegen das freigelegte Fundament nicht wochenlang ungeschützt Regen- oder Schnee-Einflüssen ausgesetzt werden. Vielmehr wird sofort nach dem Freilegen des Gebäudefundamentmauerwerks ohne große Säuberungsarbeiten die erfindungsgemäßte Dichtungsbahn mit der biegbaren Schaumstoffschicht 11 an die Außenseite des Mauerwerks 1 angelegt, das z.B. aus einzelnen Steinen 7 und dazwischen befindlichem Mörtel 8 besteht. Die armierte, aber dennoch verformbare Kunststoffschicht 12 liegt nach außen frei, wobei Randteil 12a jeweils über den Rand der Nachbarkunststoffschicht gelegt und überlappend mit dieser verschweißt wird. Im oberen Bereich ist der Verbund aus der Schaumstoffschicht 11 und der Kunststoffschicht 12 mittels beispielsweise einer Aluminium-leiste 14 und Ankern, Schrauben, Bolzen oder Nägeln 15 am Mauerwerk 1 befestigt, während der Übergang vom Mauerwerk 1 auf diese Aluminiumleiste 14 oberhalb der Dichtungsbahn 10 durch ein elastisches Fugenabdichtmittel 9 abgedeckt ist.

Soweit erforderlich, kann auf der Sohle des ausgehobenen Grabens 3 ein Drainagerohr 13 verlegt werden. Anschließend wird sofort Kies mit Kieseln 4 in den ausgehobenen Graben 3 eingeschüttet, der zwischen dem Mauerwerk 1 und dem beispielsweise lehmigen Erdreich 2 gebildet ist. Im oberen Bereich kann die Kiesausfüllung mit einem Filtervlies bedeckt und mit im Sandbett 5 verlegten Pflastersteinen 6 überdeckt werden.

Die Dichtungsbahn hat eine Breite von insb. mindestens einem Meter. Der Verbund weist in seinen bevorzugten Maßen, unabhängig von der Möglichkeit von Sonderabmessungen, eine Gesamtdicke zwischen etwa 1 und 5cm auf, wovon die Kunststoffschicht etwa 0,2 - 0,5 cm und die Schaumstoffschicht bevorzugt zwischen 0,8 und 4,8 cm dick sind; das Dickenverhältnis zwischen der Schaumstoffschicht und der Kunststoffschicht beträgt zwischen 2 und 24, insb. zwischen 10 und 15.

Es empfiehlt sich, die Dichtungsbahn zur Lagerung und zum Transport zu Rollen bzw. Wickel aufzuwickeln, und zwar derart, daß die Schaumstoffschicht jeweils innen liegt und einem Stauchdruck ausgesetzt ist, der das vorzeitige Entspannen vermeidet. Auch ist es möglich, die Dichtungsbahn dem konkreten Einsatzzweck entsprechend schon werksseitig dimensional entsprechend vorzukonfektionieren und ausgestreckt auf Paletten zu stapeln.

## Patentansprüche

1. Als wasserdichte Verkleidung von Fundamenten (1) von Bauwerken dienende flexible wasserdichte Dichtungsbahn mit einer dem Fundament (1) zugewandten flexiblen bzw. biegbaren Schaumstoffschicht (11) und mit einer damit verbundenen, dem Fundament (1) abgewandten Kunststoffschicht (12),
**dadurch gekennzeichnet,**
daß die Schaumstoffschicht (11) einen zum losen Anlegen an das Fundament (1) anlegbaren komprimierten bzw. komprimierbaren Schaumstoff aufweist, daß das Schichtdickenverhältnis zwischen der Schaumstoffschicht (11) und der Kunststoffschicht (12) mindestens 2 beträgt und daß für den Schaumstoff ein Weichschaumstoff oder elastischer Schaumstoff verwendet ist.

2. Dichtungsbahn nach Anspruch 1,
**dadurch gekennzeichnet,**
daß die Schaumstoffschicht (11) zu etwa 15-50% (im Bezug zur Ausgangsdicke derselben) komprimiert ist.

3. Dichtungsbahn nach Ansprüche 1 oder 2,
**dadurch gekennzeichet**,
daß die Schaumstoffschicht (11) aus Polyurethan-Weichschaum auf Polyätherbasis besteht.

4. Dichtungsbahn nach einem der vorhergehenden Ansprüche,
**dadurch gekennzeichnet**,
daß die Schaumstoffschicht (11) mit einem Bitumen aufweisenden Mittel imprägniert ist.

5. Dichtungsbahn nach Anspruch 4,
**dadurch gekennzeichnet**,
daß die Schaumstoffschicht (11) mit Bitumenacrylat imprägniert ist.

6. Dichtungsbahn nach einem der vorhergehenden Ansprüche,
**dadurch gekennzeichnet**,
daß die Kunststoffschicht (12) aus einem Ethylen-Buthylacrylat-Copolymerisat mit Bitumen besteht.

7. Dichtungsbahn nach einem der vorhergehenden Ansprüche,
**dadurch gekennzeichnet**,
daß die Schaumstoffschicht (11) mittels einer Klebstoffzwischenschicht mit der Kunststoffschicht (12) zu dem Verbund verbunden ist.

8. Dichtungsbahn nach einem der Ansprüche 1-6,
**dadurch gekennzeichnet**,
daß die Schaumstoffschicht (11) auf die Kunststoffschicht (12) zur Bildung des Verbundes aufkalandriert ist.

9. Dichtungsbahn nach einem der vorhergehenden Ansprüche,
**dadurch gekennzeichnet**,
daß ein Randteil (12a) der Kunststoffschicht (12) mindestens einen Seiten- und/oder Längsrand der Schaumstoffschicht (11) überragt.

10. Dichtungsbahn nach einem der vorhergehenden Ansprüche,
**dadurch gekennzeichnet**,
das Verhältnis der Dicke der Schaumstoffschicht (11) zur Dicke der Kunststoffschicht (12) zwischen 2 und 24 beträgt.

## Claims

1. Flexible, watertight sealing web, which serves as a watertight covering of foundations (1) of buildings, having a flexible or bendable layer of foam material (11) which faces the foundation (1), and a layer of plastics material (12), which is connected to said layer of foam material and faces away from the foundation (1), characterised in that the layer of foam material (11) has a compressed or compressible foam material, which can be applied to the foundation (1) for the loose joining thereto, in that the layer thickness ratio between the layer of foam material (11) and the layer of plastics material (12) is at least 2, and in that a soft foam material or resilient foam material is used for the foam material.

2. Sealing web according to claim 1, characterised in that the layer of foam material (11) is compressed to substantially 15-50 % (relative to the initial thickness thereof).

3. Sealing web according to claims 1 or 2, characterised in that the layer of foam material (11) is formed from soft polyurethane foam based on polyether.

4. Sealing web according to one of the preceding claims, characterised in that the layer of foam material (11) is impregnated with a bitumen-containing agent.

5. Sealing web according to claim 4, characterised in that the layer of foam material (11) is impregnated with bitumen acrylate.

6. Sealing web according to one of the preceding claims, characterised in that the layer of plastics material (12) is formed from an ethylene-butylacrylate copolymer with bitumen.

7. Sealing web according to one of the preceding claims, characterised in that the layer of foam material (11) is connected to the layer of plastics material (12) by means of an intermediate layer of adhesive to form the composite structure.

8. Sealing web according to one of claims 1-6, characterised in that the layer of foam material (11) is calendered onto the layer of plastics material (12) to form the composite structure.

9. Sealing web according to one of the preceding claims, characterised in that an edge portion (12a) of the layer of plastics material (12) protrudes beyond at least one lateral and/or longitudinal edge of the layer of foam material (11).

10. Sealing web according to one of the preceding claims, characterised in that the ratio of the thickness of the layer of foam material (11) to the thickness of the layer of plastics material (12) is between 2 and 24.

## Revendications

1. Membrane d'étanchéité flexible étanche à l'eau, servant de revêtement d'imperméabilisation de fondations (1) de bâtiments, comprenant une couche en mousse (11) respectivement flexible ou souple, tournée vers les fondations (1), et une couche en matière plastique (12) qui est reliée à la couche précitée et est tournée à l'opposé des fondations (1),
caractérisée par le fait
que la couche en mousse (11) présente une mousse respectivement comprimée ou compressible, pouvant être appliquée de manière lâche contre les fondations (1) ; par le fait que le rapport d'épaisseur est d'au moins 2 entre la couche en mousse (11) et la couche en matière plastique (12) ; et par le fait qu'une mousse tendre ou une mousse élastique est utilisée en tant que mousse.

2. Membrane d'étanchéité selon la revendication 1,
caractérisée par le fait
que la couche en mousse (11) est comprimée jusqu'à environ 15-50 % (par rapport à l'épaisseur initiale de cette dernière).

3. Membrane d'étanchéité selon les revendications 1 ou 2,
caractérisée par le fait
que la couche en mousse (11) est constituée d'une mousse de polyuréthanne tendre à base de polyéther.

4. Membrane d'étanchéité selon l'une des revendications précédentes,
caractérisée par le fait
que la couche en mousse (11) est imprégnée d'un moyen présentant du bitume.

5. Membrane d'étanchéité selon la revendication 4,
caractérisée par le fait
que la couche en mousse (11) est imprégnée d'acrylate bitumineux.

6. Membrane d'étanchéité selon l'une des revendications précédentes,
caractérisée par le fait
que la couche en matière plastique (12) est constituée d'un copolymère d'éthylène-butylacrylate au bitume.

7. Membrane d'étanchéité selon l'une des revendications précédentes,
caractérisée par le fait
que la couche en mousse (11) est reliée à la couche en matière plastique (12) au moyen d'une couche intercalaire d'adhésif, pour obtenir la structure composite.

8. Membrane d'étanchéité selon l'une des revendications 1-6,
caractérisée par le fait
que la couche en mousse (11) est calandrée sur la couche en matière plastique (12), afin de former la structure composite.

9. Membrane d'étanchéité selon l'une des revendications précédentes,
caractérisée par le fait
qu'une partie marginale (12a) de la couche en matière plastique (12) dépasse au-delà d'au moins un bord latéral et/ou longitudinal de la couche en mousse (il).

10. Membrane d'étanchéité selon l'une des revendications précédentes,
caractérisée par le fait
que le rapport, entre l'épaisseur de la couche en mousse (11) et l'épaisseur de la couche en matière plastique (12), est compris entre 2 et 24.
